# EUROPEAN PATENT APPLICATION

(11) **EP 2 863 288 A2**
(43) Date of publication of application: **22.04.2015**
(21) Application number: 14152961.0
(22) Date of filing: 29.01.2014
(51) Int. Cl.: G06F 3/023

(54) **Input device and system with macro recording function and method of using the same**

(30) Priority: 18.10.2013 TW 102137673
(71) Applicant: Giga-Byte Technology Co., Ltd., New Taipei City 231 (TW)
(72) Inventor: Lin, Yin Yu, 231 Taiwan (TW); Huang, Haw Kae, 231 Taiwan (TW)
(74) Representative: Schwerbrock, Florian

(57) **Abstract**

An input device (100) and a system (200) with macro recording function and a method of macro recording are provided. The input device (100) includes a plurality of keys (110), a macro key (120), and a control unit (130). The method of macro recording includes the steps of: detecting a force of continual pressing by the macro key (120) and responding to generate a start signal, receiving the start signal by the control unit (130) and responding to execute a macro recording process (131), detecting a force of pressing separately by the keys (110) and responding to generate instruction signals, and finally, the control unit (130) records the instruction signals as a macro instruction and assigns one of the instruction signals as a designated instruction.

## Description

### FIELD OF THE INVENTION

The present invention relates to an input device and, more particular, to an input device and input system with a macro recording function and a method of using the same.

### BACKGROUND OF THE INVENTION

The advent of the information age has made computers ubiquitous in our daily life. As computer technology advances, a computer input device, such as a keyboard or a mouse, which would only accept input of characters and numerical information, has been designed to be more human-centered to accept versatile inputs. The keyboard, for example, has not only served as a simple input interface, but also provided specific functions according to the user's requirements for computer games or word processing. In addition to standard keys for input, the keyboards of current design may be equipped with macro keys for performing macro functions, a user-friendly design which makes the computer more enjoyable and convenient to use.

A macro, in general, is a batch command that performs a series of input sequences, such as keyboard keystrokes or mouse buttons, to simplify the user's input actions. The macro key, corresponding to a macro function, is designed to set up related settings for an application program configured to define and record special features of the keyboard. Through some specific software, a sequence of keystrokes can be recorded as a macro instruction, which corresponds to a macro key. At a later time when the macro key is pressed, the corresponding macro will be executed; that is, the input actions for the macro will be played back as recorded.

However, people who frequently use public computers may be used to carrying their own mouse or keyboard. Therefore, when they use different public computers and want to access a macro, they have to re-install an application program, a program for setting up special keys of a keyboard or buttons of a mouse, on each of the computers they use, and record the macro to be stored in each of the computers, a repetitive process which may cause inconvenience to use.

Further, for commercially available computer peripheral devices having macro recording function, one macro key is usually bound to one macro to be recorded. Therefore, if the macro function defined by the macro key is to be changed, one has to re-run the application program and record the macro again, where the application program is running on a certain operating system of a computer. It is not possible that, with current technology, one can change and re-record the macro without launching the application program, let alone the operating system.

Some prior-art macro recording input devices provide multiple modes to switch between macro instructions containing different key combinations. When one specific mode is selected, however, all the macro settings associated with one key combination will be changed accordingly, but the settings corresponding to the macro key are fixed for different modes when recorded. Therefore, it is still not possible to change the key combination that has been recorded without launching the application program.

### SUMMARY OF THE INVENTION

In view of the aforementioned problems, it is an object of the present invention to provide an input device with a macro recording function, an input system with a macro recording function, and a method of macro recording, to relax the restriction that an operating system is required to run for the prior-art input devices to change or record macros, which causes inconvenience to use.

The present invention provides an input device with a macro recording function. The input device includes multiple keys, a macro key, and a control unit, where the control unit is electrically connected to the keys and the macro key respectively and stores a macro recording process. The keys separately detect actuation actions and respond to trigger multiple instruction signals. The macro key detects a continual key pressing action and responds to generate a start signal to be sent to the control unit. On receiving the start signal, the control unit responds to execute the macro recording process, and the control unit records the instruction signals into the macro recording process as a macro instruction and assigns one of the instruction signals as a designated instruction.

In addition to the input device, the present invention provides an input system with a macro recording function. The input system includes a first input device. The first input device includes multiple keys, a macro key, and a control unit, where the control unit is electrically connected to the keys and the macro key respectively and stores a macro recording process. The keys separately detect actuation actions and respond to trigger multiple first instruction signals. The macro key detects a continual key pressing action and responds to generate a start signal to be sent to the control unit. On receiving the start signal, the control unit responds to execute the macro recording process, and the control unit records the first instruction signals into the macro recording process as a macro instruction and assigns one of the first instruction signals as a designated instruction.

The input system of the present invention further includes a second input device. The second input device is electrically connected to the first input device and includes multiple keys. The keys separately detect actuation actions and respond to trigger multiple second instruction signals. While the macro recording process is in operation, the control unit of the input system records the first instruction signals and the second instruction signals into the macro recording process respectively and assigns one from the first instruction signals or from the second instruction signals as a designated instruction.

The present invention still further provides a method of macro recording. The method includes following steps: the macro key of the first input device detects a continual key pressing action and responds to generate a start signal; the control unit receives the start signal and responds to execute the macro recording process; the keys of the input devices separately detect actuation actions and respond to trigger multiple instruction signals; and the control unit receives the instruction signals and records the instruction signals into the macro recording process as a macro instruction and assigns one of the instruction signals as a designated instruction.

The advantageous effect of the present invention is that the input device is provided with a macro key, and the control unit of the input device contains a macro recording process, which provides, through direct operations on the input device, a fast and at-any-time approach to record input actions corresponding to a macro instruction. In addition, in order to set up the macro instruction, it is not required to launch a specific software program, which requires an operating system to run with, and thereby the present invention greatly improves the convenience of using a macro.

### BRIEF DESCRIPTION OF THE DRAWINGS

The structure as well as a preferred mode of use, further objects, and advantages of the present invention will be best understood by referring to the following detailed description of some illustrative embodiments in conjunction with the accompanying drawings, in which:
FIG. 1 is a perspective schematic drawing of an input device according to one embodiment of the present invention;
FIG. 2 is a block diagram of an input device according to one embodiment of the present invention;
FIG. 3 is a block diagram of an input system according to one embodiment of the present invention;
FIG. 4A is a flowchart of a method of macro recording according to one embodiment of the present invention;
FIG. 4B is a flowchart of the method of macro recording according to one embodiment of the present invention;
FIG. 5A is a flowchart of the method of macro recording according to another embodiment of the present invention; and
FIG. 5B is a flowchart of the method of macro recording according to another embodiment of the present invention.

### DETAILED DESCRIPTION OF PREFERRED EMBODIMENTS

It should be noted that the input devices in the embodiments of the present invention are exemplified by a computer keyboard. Persons skilled in the art should be able to follow the examples and apply the technical means disclosed to any type of computer input peripheral devices, including, but not limited to, a mouse, a track ball, or the like.

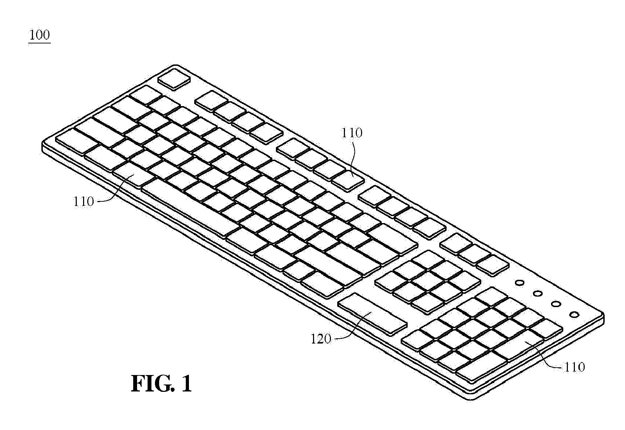

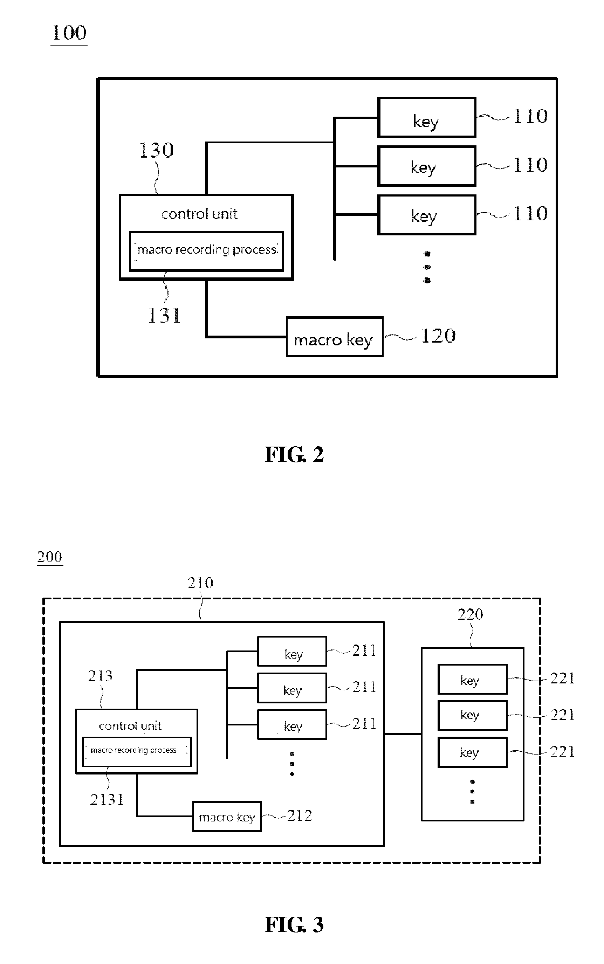

Please refer to FIG. 1 and FIG. 2 for a perspective schematic drawing, and a block diagram, of an input device according to one embodiment of the present invention. The input device 100 with macro recording function includes a plurality of keys 110, a macro key 120, and a control unit 130, where the keys 110 and the macro key 120 are disposed on the external housing of the input device 100. When receiving a force of key pressing, the keys 110 and the macro key 120 respond to move inwards the housing of the input device 100, causing the keys 110 and the macro key 120 to abut against the switches on the circuit board (not shown) inside the housing of the input device 100, and trigger the switches to generate corresponding electrical signals.

With continued reference to FIG. 2, there is an electrical connection between the keys 110 and the control unit 130 and between the macro key 120 and the control unit 130. When the keys 110 detect external force of pressing, the keys respond to generate actuation actions and move downwards, causing the keys to abut against the switches on the circuit board inside the input device 100, and trigger the switches to generate instruction signals, corresponding to the keys, to be sent to the control unit 130. Likewise, when the macro key 120 detects a force of continual pressing, the macro key 120 responds to generate an action of continual pressing and moves downwards, causing the macro key 120 to abut against the switch on the circuit board inside the input device 100, and triggers the switch to generate a start signal, corresponding to the macro key 120, to be sent to the control unit 130.

It is worth noting that the control unit 130 in the embodiment of the present invention is a micro controller unit (MCU). However, the control unit 130 is not limited to one type of MCU. Persons skilled in the art can use other type of MCU according to different requirements. Besides, the macro key 120 of the present invention will trigger the switch on the circuit board to generate the start signal only when the macro key 120 receives an external force of continual pressing. If the macro key 120 receives an external force of pressing for only a short period of time, the switch corresponding to the macro key 120 will not be triggered to generate the start signal. The time period of continual pressing to generating the start signal can be set to some interval of seconds according to difference requirements.

The control unit 130 of the present embodiment stores a macro recording process 131. When receiving the start signal triggered by the macro key 120, the control unit 130 responds to execute the macro recording process 131. At the same time during the macro recording process 131 is in operation, if the control unit 130 receives the instruction signals triggered by the keys 110, the control unit 130 will record the instruction signals as a macro instruction and assign one of the instruction signals as a designated instruction.

Later when the macro key 120 detects that the external force pressing the key is released, the macro key 120 then returns to its original key position where the macro key 120 is not pressed. After returning to the original key position, the macro key 120 will stay away from the switch on the circuit board, causing the switch to respond to generate a stop signal to be sent to the control unit 130. On receiving the stop signal, the control unit 130 responds to stop the operation of the macro recording process.

FIG. 3 shows a block diagram of an input system according to one embodiment of the present invention. Referring to FIG. 3, the input system 200 with macro recording function includes a first input device 210 and a second input device 220. The first input device 210 includes a plurality of keys 211, a macro key 212, and a control unit 213, where there is an electrical connection between the keys 211 and the control unit 213 and between the macro key 212 and the control unit 213. When the keys 211 detect external force of pressing, the keys respond to generate actuation actions and move downwards, causing the keys to abut against the trigger switches on the circuit board inside the first input device 210, and trigger the switches to generate the first instruction signals, corresponding to the keys, to be sent to the control unit 213. Likewise, when the macro key 212 detects a force of continual pressing, the macro key 212 responds to generate an action of continual pressing and moves downwards, causing the macro key to abut against the trigger switch on the circuit board inside the first input device 210, and triggers the switch to generate a start signal, corresponding to the macro key 212, to be sent to the control unit 213.

It is worth noting that the control unit 213 in the embodiment of the present invention is a micro controller unit (MCU). However, the control unit 213 is not limited to one type of MCU. Persons skilled in the art can use other type of MCU according to different requirements. Besides, the macro key 212 of the present invention will trigger the switch on the circuit board to generate a start signal only when the macro key 212 receives an external force of continual pressing. If the macro key 212 receives an external force for only a short period of time, the switch corresponding to the macro key 212 will not be triggered to generate the start signal. The time period of continual pressing to generating the start signal can be set to specific interval of seconds according to difference requirements.

The control unit 213 of the embodiment stores a macro recording process 2131. When receiving the start signal triggered by the macro key 212, the control unit 213 responds to execute the macro recording process 2131. At the same time during the macro recording process 2131 is in operation, if the control unit 213 receives the first instruction signals triggered by the keys 211, the control unit 213 will record the first instruction signals as a macro instruction and assign one of the first instruction signals as a designated instruction.

The second input device 220 of the present embodiment is electrically connected to the first input device 210, where the second input device 220 includes a plurality of keys 221. When the keys 221 detect external force of pressing, the keys respond to generate actuation actions, which generate the second instruction signals, corresponding to the keys, to be sent to the control unit 213 of the first input device 210. At the same time during the macro recording process 2131 is in operation, if the control unit 213 receives the second instruction signals triggered by the keys 221 of the second input device, the control unit 213 will record the first instruction signals and the second instruction signals into the macro recording process 2131 as the macro instruction and assign one from the first instruction signals or from the second instruction signals as the designated instruction.

Further, once the macro key 212 detects that the external force pressing the key is released, the macro key 212 then returns to its original key position where the macro key 212 is not pressed. After returning to the original key position, the macro key 212 will stay away from the switch on the circuit board, causing the switch to respond to generate a stop signal to be sent to the control unit 213. On receiving the stop signal, the control unit 213 responds to stop the operation of the macro recording process.

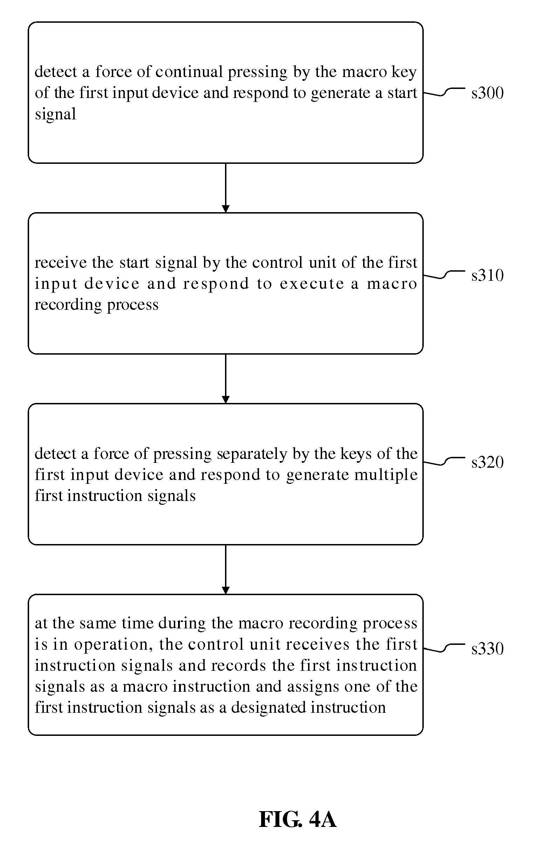

FIG. 4A shows a flowchart of a method of macro recording according to one embodiment of the present invention. With reference to the foregoing description regarding the input devices and the input system, the method of macro recording includes the steps as follows.

To begin with, detect a force of continual pressing by the macro key of the first input device and respond to generate a start signal (s300). Second, receive the start signal by the control unit of the first input device and respond to execute a macro recording process (s310). Third, detect a force of pressing separately by the keys of the first input device and respond to generate multiple first instruction signals (s320). Finally, at the same time during the macro recording process is in operation, the control unit receives the first instruction signals and records the first instruction signals as a macro instruction and assigns one of the first instruction signals as a designated instruction (s330).

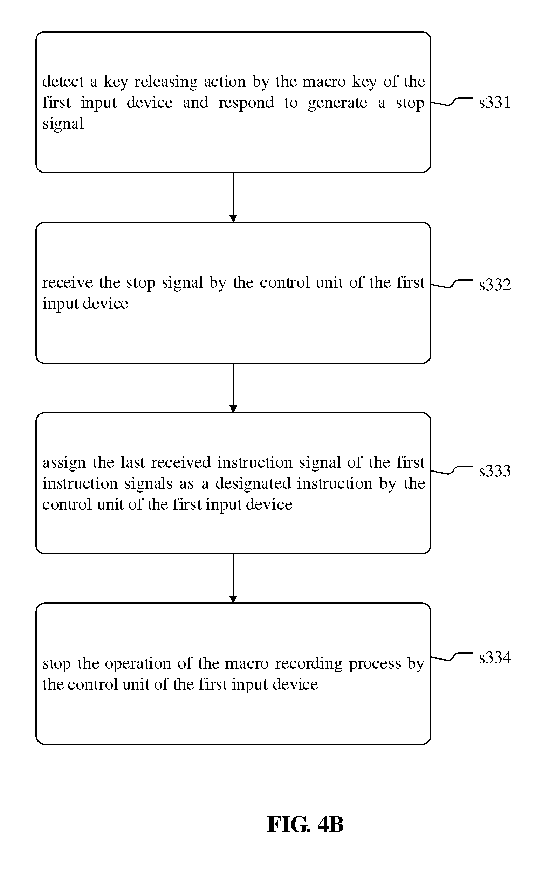

Referring to FIG. 4B showing a flowchart of the method of macro recording, with further reference to FIG. 4A, the method of macro recording, following the step 330, further includes following steps.

First, detect a key releasing action by the macro key of the first input device and respond to generate a stop signal (s331). Second, receive the stop signal by the control unit of the first input device (s332). Third, assign the last received instruction signal of the first instruction signals as a designated instruction by the control unit of the first input device (s333). Finally, stop the operation of the macro recording process by the control unit of the first input device (s334).

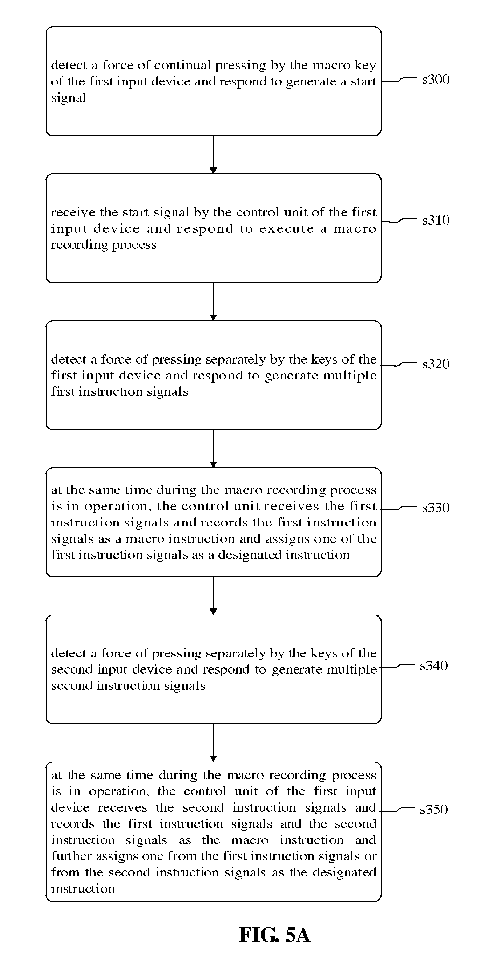

FIG. 5A shows a flowchart of a method of macro recording according to another embodiment of the present invention. In addition to the steps 300∼330 shown in FIG. 4A, the method of macro recording of the present embodiment further includes following steps.

First, detect a force of pressing separately by the keys of the second input device and respond to generate multiple second instruction signals (s340). Second, at the same time during the macro recording process is in operation, the control unit of the first input device receives the second instruction signals and records the first instruction signals and the second instruction signals as the macro instruction and further assigns one from the first instruction signals or from the second instruction signals as the designated instruction (s350).

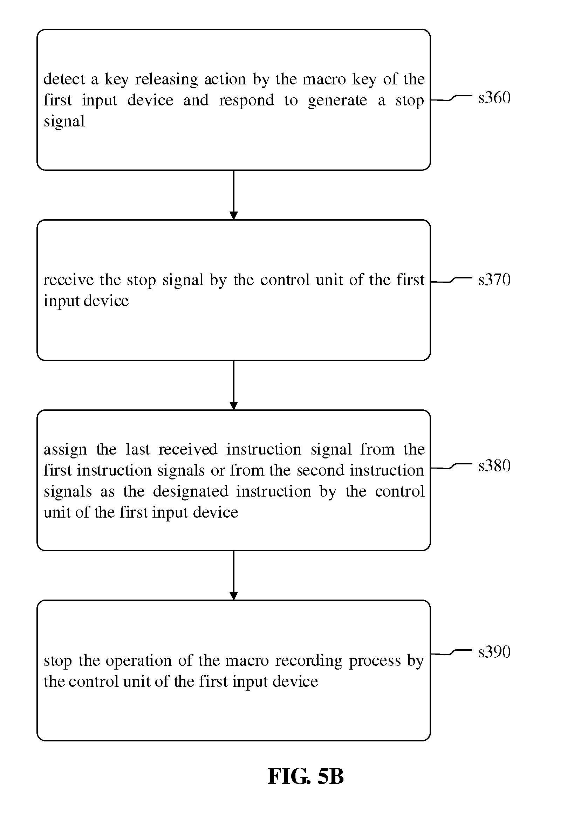

Referring to FIG. 5B showing a flowchart of the method of macro recording, with further reference to FIG. 5A, the method of macro recording, following the step 350, further includes following steps.

First, detect a key releasing action by the macro key of the first input device and respond to generate a stop signal (s360). Second, receive the stop signal by the control unit of the first input device (s370). Third, assign the last received instruction signal from the first instruction signals or from the second instruction signals as the designated instruction by the control unit of the first input device (s380). Finally, stop the operation of the macro recording process by the control unit of the first input device (s390).

The present invention has been described by reference to preferred embodiments thereof and it is clear that the input devices and the input system disclosed use a macro key to issue instructions for macro recording to the control unit therein, a technical means which provides a fast and at-any-time approach to record macro instructions and overcomes the inconvenience deficiency in the prior art where a macro recording input device has to, in order to record or change a macro instruction, launch an operating system to run a specific software application for setting up the macro.

## Claims

1. An input device with a macro recording function, comprising:
a plurality of keys (110), detecting actuation actions and responding to trigger a plurality of instruction signals;
a macro key (120), detecting a continual key pressing action and responding to trigger a start signal; and
a control unit (130) electrically connected to said keys (110) and said macro key (120) respectively, **characterized in that** said control unit (130) stores a macro recording process (131), and when receiving said start signal, said control unit (130) responds to execute said macro recording process (131), and said control unit (130) records said instruction signals into said macro recording process (131) as a macro instruction and assigns one of said instruction signals as a designated instruction.

2. The input device of claim 1, **characterized in that** said macro key (120) detects a key releasing action and responds to trigger a stop signal, and when receiving said stop signal, said control unit (130) stops the operation of said macro recording process (131).

3. The input device of claim 1, **characterized in that** said control unit (130) is a micro controller unit, or MCU.

4. An input system with a macro recording function, comprising:
a first input device (210), comprising:
a plurality of keys (211), detecting actuation actions and responding to trigger a plurality of first instruction signals;
a macro key (212), detecting a continual key pressing action and responding to trigger a start signal; and
a control unit (213) electrically connected to said keys (211) and said macro key (212) respectively, **characterized in that** said control unit (213) stores a macro recording process (2131), and said control unit (213) receives said start signal and responds to execute said macro recording process (2131), and said control unit (213) records said first instruction signals into said macro recording process (2131) as a macro instruction and assigns one of said first instruction signals as a designated instruction.

5. The input system of claim 4, further comprising:
a second input device (220) electrically connected to said first input device (210), said second input device (220) including a plurality of keys (221), said keys (221) detecting actuation actions and responding to trigger a plurality of second instruction signals, **characterized by** said control unit (213) recording said first instruction signals and said second instruction signals into said macro recording process (2131) as said macro instruction and assigning one from said first instruction signals or from said second instruction signals as said designated instruction.

6. The input system of claim 5, **characterized in that** said macro key (212) detects a key releasing action and responds to trigger a stop signal, and when receiving said stop signal, said control unit (213) stops the operation of said macro recording process (2131).

7. The input system of claim 5, **characterized in that** said control unit is a micro controller unit, or MCU.

8. A method of macro recording on an input system with a macro recording function having a first input device (210), the method performed by said first input device (210) comprising the steps of:
detecting a continual pressing action and responding to trigger a start signal by a macro key (212) of said first input device (210);
receiving said start signal and responding to execute a macro recording process (2131) by a control unit (213) of said first input device (210);
detecting actuation actions and responding to trigger a plurality of first instruction signals by a plurality of keys (211) of said first input device (210); and
receiving said first instruction signals, recording said first instruction signals into a macro recording process (2131) in said control unit (213) as a macro instruction, and assigning one of said first instruction signals as a designated instruction by said control unit (213) of said first input device (210).

9. The method of macro recording of claim 8, **characterized in that** the step of assigning one of said first instruction signals as a designated instruction further comprises the steps of:
detecting a key releasing action and responding to trigger a stop signal by said macro key (212) of said first input device (210);
receiving said stop signal in said macro recording process (2131) by said control unit (213) of said first input device (210);
assigning the last received instruction signal of said first instruction signals as said designated instruction by said control unit (213) of said first input device (210); and
stopping the operation of said macro recording process (2131) by said control unit (213) of said first input device (210).

10. The method of macro recording of claim 8, **characterized in that** the input system further comprises a second input device (220), the method further comprising the steps of:
detecting actuation actions and responding to trigger a plurality of second instruction signals by a plurality of keys (221) of said second input device (220); and
receiving said second instruction signals, recording said first instruction signals and said second instruction signals into said macro recording process (2131) in said control unit (213) as said macro instruction, and assigning one from said first instruction signals or from said second instruction signals as said designated instruction by said control unit (213) of said first input device (210).

11. The method of macro recording of claim 10, **characterized by** further comprising the steps of:
detecting a key releasing action and responding to trigger a stop signal by said macro key (212) of said first input device (210);
receiving said stop signal in said macro recording process (2131) by said control unit (213) of said first input device (210);
assigning the last received instruction signal of said first instruction signals or of said second instruction signals as said designated instruction by said control unit (213) of said first input device (210); and
stopping the operation of said macro recording process (2131) by said control unit (213) of said first input device (210).
